(19) Europäisches Patentamt

European Patent Office

Office européen des brevets

(11) Veröffentlichungsnummer: **0 495 423 A2**

# (12) EUROPÄISCHE PATENTANMELDUNG

(21) Anmeldenummer: **92100425.5**

(22) Anmeldetag: **13.01.92**

(51) Int. Cl.5: **H04Q 11/04**, H04M 11/06, H04M 1/00

(30) Priorität: **17.01.91 AT 98/91**

(43) Veröffentlichungstag der Anmeldung:
**22.07.92 Patentblatt 92/30**

(84) Benannte Vertragsstaaten:
**AT CH DE FR GB IT LI NL**

(71) Anmelder: **Siemens Aktiengesellschaft Österreich**
**Siemensstrasse 88 - 92**
**A-1210 Wien(AT)**

(84) **AT**

(71) Anmelder: **Siemens Aktiengesellschaft**
**Postfach 22 16 34**
**W-8000 München 2(DE)**

(84) **CH DE FR GB IT LI NL**

(72) Erfinder: **Witt-Dörring, Rudolf, Dipl.-Ing.**
**Paniglgasse 4/1**
**A-1040 Wien(AT)**

(54) **Vorrichtung zur Mehrfachnutzung von Teilnehmerleitungen.**

(57) Analoge Telefonapparate (TA) werden als Gemeinschaftsanschluß über eine Anschlußeinrichtung (RWD) und eine gemeinsame Teilnehmerleitung (TL) mit einer ISDN-Vermittlungsstelle verbunden. Die Anschlußeinrichtung (RWD) enthält eine Echokompensationsbaugruppe (IEC), eine Kommunikationssteuerung (ICC) mit einem Mikrocomputer (µC) zur Signalisierauswertung, eine Digital/Analog-Wandlergruppe (SICOFI) und eine Leitungsbaugruppe (SLIC) je Telefonapparat (TA). Durch die teilnehmerseitige Digital/Analog-Wandlung werden mit der Nutzung des ISDN-Standards Teilnehmerleitungen (TL) eingespart und eine spätere Umstellung auf digitale Teilnehmeranschlüsse kann problemlos erfolgen. Die Stromversorgung der Anschlußeinrichtung (RWD) und der Telefonapparate (TA) erfolgt betriebsmäßig durch Fernspeisung.

## FIG.1

EP 0 495 423 A2

Die Erfindung betrifft eine Vorrichtung zur Mehrfachnutzung von Teilnehmerleitungen mit digitaler Nachrichtenübertragung in mehreren Sprachkanälen und mindestens einem Datenkanal durch analoge Teilnehmerendgeräte, wobei eine Stromversorgung von der Vermittlungsstelle her erfolgt.

In einem Fernsprechvermittlungsnetz nach ISDN-Standard, beschrieben beispielsweise in telcom report, Feber 1985, Sonderheft "Diensteintegrierendes Digitalnetz ISDN", können über einen S-Bus bis zu acht Endgeräte je Teilnehmer an eine Netzabschlußeinrichtung angeschlossen werden. Diese ist über eine Teilnehmerleitung an der U-Schnittstelle mit einer Ortsvermittlung verbunden. Die Netzabschlußeinrichtung enthält eine Stromversorgung mit Anschluß an das Stromnetz, um die notwendige Energie zum Betreiben des S-Busses zu erhalten. Bei Ausfall der Stromversorgung wird ein Telefonapparat von der Vermittlungsstelle ferngespeist. Zum Aufbau des Netzes benötigte Bauelemente und -gruppen sind im telcom report 13 (1990), Heft 2, Seite 70 - 73 beschrieben.

Zur Überwindung von Leitungsengpässen in der Umstellungsphase von analogen auf digitale Teilnehmeranschlüsse kann innerhalb der Vermittlungsstelle die digitalisierte Sprache analog gewandelt und mit Signalisierungsinformation versehen werden. Anstelle der Teilnehmerleitung wird eine Baugruppe angeschaltet mit der die Signalisierung mehrerer Teilnehmer verbunden wird. Die Gespräche werden anschließend wieder digitalisiert, über einen Multiplexer verbunden und über die Teilnehmerleitung übertragen. Beim Teilnehmer wird die Signalisierung abgetrennt und das Gesprächssignal analogisiert.

Der Erfindung liegt die Aufgabe zugrunde, die Mehrfachnutzung von Teilnehmerleitungen zu vereinfachen.

Dies wird erfindungsgemäß dadurch erreicht, daß die Teilnehmerleitung mit einer Anschlußeinrichtung verbunden ist, die eine Echokompensationsbaugruppe, eine Kommunikationssteuerung mit einem Mikrocomputer zur Signalisierauswertung, eine Digital/Analog-Wandlergruppe und eine Leitungsbaugruppe je Teilnehmerendgerät enthält und daß die Stromversorgung der Anschlußeinrichtung und von Telefonapparaten betriebsmäßig von der Vermittlungsstelle her erfolgt.

Dadurch wird der ISDN-Standard mit der U-Schnittstelle genutzt. Die beiden Sprachkanäle können als Gemeinschaftsanschluß zwei Teilnehmern zugeordnet werden. Es können standardisierte ISDN-Baugruppen im Teilnehmerbereich eingesetzt und durch hohe Stückzahlen eine Verbilligung der Baugruppen erreicht werden. Dadurch wird die Einführung des ISDN beträchtlich erleichtert und der spätere Umstieg der Teilnehmer von den zunächst noch analogen Teilnehmerendgeräten auf ISDN-Endgeräte ist ohne jedem zusätzlichen Aufwand möglich. Mit Hilfe einer reduzierten Datenübertragungsrate von 32-kBit/s können vier Gemeinschaftsanschlüsse über eine Teilnehmerleitung an die Ortsvermittlung angeschlossen werden. Da die Umsetzung über eine Netzabschlußeinheit auf den S-Bus entfällt, kann eine betriebsmäßige Fernspeisung von der Vermittlungsstelle her genutzt werden. Die Digital/Analog-Wandlung der Gespräche erfolgt nur in der Anschlußeinrichtung. Ein zusätzlicher, amtsseitiger Aufwand für die Signalisierung entfällt durch die Nutzung des D-Kanals.

Zur Ausfallssicherung ist es vorteilhaft, daß der Anschlußeinrichtung ein Umschalter vorgeschaltet ist, mit dem durch Polaritätsumkehr die Anschlußeinrichtung abschaltbar ist. So kann eine Störung der Anschlußeinrichtung auch dann behoben werden, wenn sie im privaten Bereich installiert und zeitweise nicht zugänglich ist. Nach dem Abschalten der defekten Anschlußeinrichtung kann an zugänglicher Stelle eine neue Anschlußeinrichtung mit Umschalter in Betrieb genommen. Dadurch ist der Fehler bei allen angeschlossenen Teilnehmern beseitigt. Es können aber ursprünglich auch zwei Anschlußeinrichtungen vorhanden sein, und durch die Polaritätsumkehr wird von der defekten auf die betriebsbereite umgeschaltet.

Die Erfindung wird anhand eines Ausführungsbeispieles mit Figuren näher erläutert. Es zeigen:

Fig. 1     ein schematisches Blockschaltbild des Ausführungsbeispieles und

Fig. 2     den Aufbau einer Ausfallssicherung.

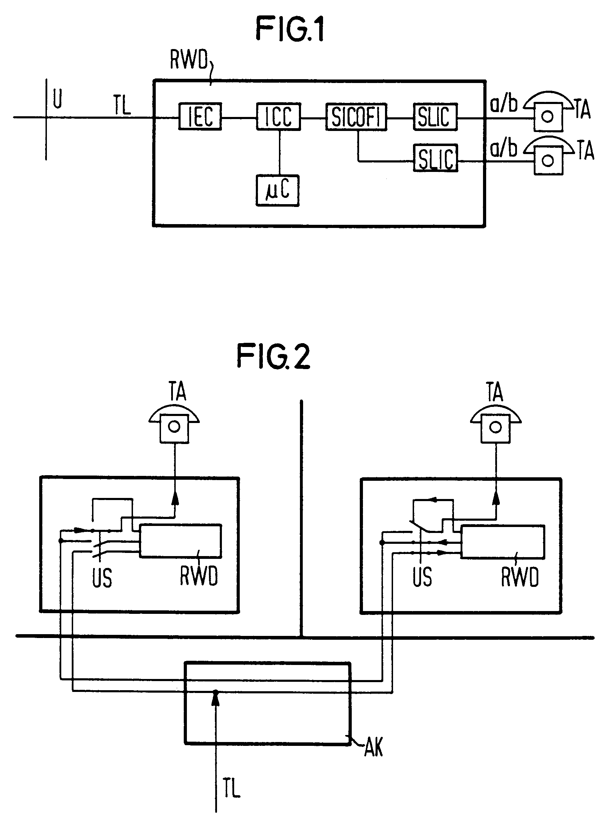

Gemäß Fig. 1 ist eine Anschlußeinrichtung RWD über eine U-Schnittstelle U mit einer ISDN-Vermittlungsstelle verbunden. Über eine Teilnehmerleitung TL in 2-Draht-Ausführung werden zwei digitale Sprachkanäle und ein digitaler Signalisierungskanal übertragen. Nach einer Echokompensationsbaugruppe IEC wird die Signalisierung der Sprachkanäle aus dem D-Kanal durch eine Kommunikationssteuerung ICC mit einem Mikrocomputer $\mu$C ausgewertet. Mit einer Digital/Analog-Wandlergruppe SICOFI werden Gespräche in ankommender Richtung analog und in abgehender Richtung digital gewandelt. Gleichzeitig wird auch die entsprechende Codierung und Filterung vorgenommen. Über analoge Leitungsbaugruppen SLIC und Adern a/b sind Telefonapparate TA der Teilnehmer angeschlossen. Statt eines Telefonapparates TA könnte auch ein Doppelanschluß mit einem Fax- oder Btx-Gerät vorhanden sein. Die im ISDN für Fernspeisung zur Verfügung stehende Leistung reicht aus, die Anschlußeinrichtung RWD und die Telefonapparate TA zu betreiben.

Fig. 2 zeigt eine Ersatzschaltung für eine defekte Anschlußeinrichtung RWD durch Polaritätsumkehr mit einem Umschalter US. Zwei Anschlußeinrichtungen RWD sind über einen Anschlußkasten AK mit der Teilnehmerleitung TL verbunden, die beiden Telefonapparate TA sind gemeinsam an jede Anschlußeinrichtung RWD anschaltbar. Durch Polaritätsumkehr der Teilnehmerleitung TL werden die beiden Umkehrschalter US betätigt und die eine Anschlußeinrichtung RWD wird ab- und die andere Anschlußeinrichtung RWD zugeschaltet. Die zweite Anschlußeinrichtung RWD muß nicht von vornherein installiert sein, es ist auch möglich, sie erst bei Versagen der anderen einzusetzen.

**Patentansprüche**

1. Vorrichtung zur Mehrfachnutzung von Teilnehmerleitungen (TL) mit digitaler Nachrichtenübertragung in mehreren Sprachkanälen und mindestens einem Datenkanal durch analoge Teilnehmerendgeräte, wobei eine Stromversorgung von der Vermittlungsstelle her erfolgt, **dadurch gekennzeichnet,** daß die Teilnehmerleitung (TL) mit einer Anschlußeinrichtung (RWD) verbunden ist, die eine Echokompensationsbaugruppe (IEC), eine Kommunikationssteuerung (ICC) mit einem Mikrocomputer ($\mu$C) zur Signalisierauswertung, eine Digital/Analog-Wandlergruppe (SICOFI) und eine Leitungsbaugruppe (SLIC) je Teilnehmerendgerät enthält und daß die Stromversorgung der Anschlußeinrichtung (RWD) und von Telefonapparaten (TA) betriebsmäßig von der Vermittlungsstelle her erfolgt.

2. Vorrichtung nach Anspruch 1, **dadurch gekennzeichnet,** daß der Anschlußeinrichtung (RWD) ein Umschalter (US) vorgeschaltet ist, mit dem durch Polatitätsumkehr die Anschlußeinrichtung (RWD) abschaltbar ist.

# FIG.1

# FIG.2